# EUROPEAN PATENT APPLICATION

(11) **EP 4 654 686 A1**
(43) Date of publication of application: **26.11.2025**
(21) Application number: 23916745.5
(22) Date of filing: 18.01.2023
(51) Int. Cl.: H04W 64/00

(54) **METHOD AND APPARATUS FOR POSITIONING**

(71) Applicant: Quectel Wireless Solutions Co., Ltd, Shanghai 201601 (CN)
(72) Inventor: ZHAO, Zheng, Shanghai 201601 (CN); LYU, Ling, Shanghai 201601 (CN); YANG, Zhongzhi, Shanghai 201601 (CN)
(74) Representative: Fish & Richardson P.C.
(86) International application number: PCT/CN2023/072948
(87) International publication number: WO 2024/152258

(57) **Abstract**

The present disclosure provides a method and apparatus for positioning. The method includes: determining, by a positioning device, one or both of reliability and integrity of a positioning result; and transmitting, by the positioning device, one or both of the reliability and the integrity of the positioning result to a positioning request device. One or both of the reliability and the integrity of the positioning result is indicated by one or more of: a number of base stations participating in positioning, a positioning error, and a positioning error level.

## Description

### TECHNICAL FIELD

The present disclosure relates to the field of positioning technology, and more specifically to a method and apparatus for positioning.

### BACKGROUND

In the field of some positioning technologies, such as a navigation field, a positioning integrity evaluation metric is introduced. The positioning integrity can provide an alert capability to a positioning request device when the reliability and/or integrity of a positioning result do not meet requirements, so as to ensure security of navigation. At present, there is no clear solution regarding how to report the reliability and/or integrity of the positioning result.

### SUMMARY

The present disclosure provides a method and apparatus for positioning. Several aspects related to the present disclosure are described below.

According to a first aspect, a method for positioning is provided, including: determining, by a positioning device, one or both of reliability and integrity of a positioning result; and transmitting, by the positioning device, one or both of the reliability and the integrity of the positioning result to a positioning request device, where one or both of the reliability and the integrity of the positioning result is indicated by one or more of: a number of base stations participating in positioning, a positioning error, and a positioning error level.

According to a second aspect, a method for positioning is provided, including: receiving, by a positioning request device, one or both of reliability and integrity of a positioning result transmitted by a positioning device, where one or both of the reliability and the integrity of the positioning result is indicated by one or more of: a number of base stations participating in positioning, a positioning error, and a positioning error level.

According to a third aspect, a method for positioning is provided, including: determining, by a positioning device, whether a position of a base station is accurate; transmitting, by the positioning device, a first request message to a network device when the position of the base station is inaccurate, where the first request message is used to request to update the position of the base station; receiving, by the positioning device, an updated position of the base station transmitted by the network device; and locating, by the positioning device, a terminal device using the updated position of the base station.

According to a fourth aspect, a positioning device is provided, including: a determining unit, configured to determine one or both of reliability and integrity of a positioning result; and a transmitting unit, configured to transmit one or both of the reliability and the integrity of the positioning result to a positioning request device; where one or both of the reliability and the integrity of the positioning result is indicated by one or more of: a number of base stations participating in positioning, a positioning error, and a positioning error level.

According to a fifth aspect, a positioning request device is provided, including: a receiving unit, configured to receive one or both of reliability and integrity of a positioning result transmitted by a positioning device, where one or both of the reliability and the integrity of the positioning result is indicated by one or more of: a number of base stations participating in positioning, a positioning error, and a positioning error level.

According to a sixth aspect, a positioning device is provided, including: a determining unit, configured to determine whether a position of a base station is accurate; and a transmitting unit, configured to transmit a first request message to a network device when the position of the base station is inaccurate, where the first request message is used to request to update the position of the base station; a receiving unit, configured to receive an updated position of the base station transmitted by the network device; and a positioning unit, configured to position a terminal device using the updated position of the base station.

According to a seventh aspect, an apparatus for wireless communication is provided, including a processor, a memory, and a communication interface, where the memory is configured to store one or more computer programs, and the processor is configured to invoke the one or more computer program in the memory to cause a terminal device to perform the method according to any one of the first aspect to the third aspect.

According to an eighth aspect, an apparatus is provided, including a processor, configured to invoke a program from a memory to perform the method according to any one of the first aspect to the third aspect.

According to a ninth aspect, a chip is provided, including a processor, configured to invoke a program from a memory to cause a device installed with the chip to perform the method according to any one of the first aspect to the third aspect.

According to a tenth aspect, a computer-readable storage medium is provided, storing a program, where the program causes a computer to perform the method according to any one of the first aspect to the third aspect.

According to an eleventh aspect, a computer program product is provided, including a program, and the program causes a computer to perform the method according to any one of the first aspect to the third aspect.

According to a twelfth aspect, a computer program is provided, where the computer program causes a computer to perform the method according to any one of the first aspect to the third aspect.

In the present disclosure, one or more of the number of base stations, the positioning error, and the positioning error level are used to indicate the reliability and/or integrity of the positioning result to the positioning request device, so as to provide a clear solution for reliability and/or integrity reporting.

### BRIEF DESCRIPTION OF THE DRAWINGS

FIG. 1 is an exemplary diagram of a system architecture applicable to a communication system in an embodiment of the present disclosure.
FIG. 2 is a schematic structural diagram of a positioning system according to an embodiment of the present disclosure.
FIG. 3 is a schematic flowchart of a method for positioning according to an embodiment of the present disclosure.
FIG. 4 is a schematic diagram of a method for determining a valid base station according to an embodiment of the present disclosure.
FIG. 5 is another schematic flowchart of a method for positioning according to an embodiment of the present disclosure.
FIG. 6 is another schematic flowchart of a method for positioning according to an embodiment of the present disclosure.
FIG. 7 is another schematic flowchart of a method for positioning according to an embodiment of the present disclosure.
FIG. 8 is another schematic flowchart of a method for positioning according to an embodiment of the present disclosure.
FIG. 9 is a schematic diagram of determining whether a position of a base station is accurate according to an embodiment of the present disclosure.
FIG. 10 is another schematic flowchart of a method for positioning according to an embodiment of the present disclosure.
FIG. 11 is another schematic flowchart of a method for positioning according to an embodiment of the present disclosure.
FIG. 12 is a schematic block diagram of a positioning device according to an embodiment of the present disclosure.
FIG. 13 is a schematic block diagram of a positioning request device according to an embodiment of the present disclosure.
FIG. 14 is another schematic block diagram of a positioning device according to an embodiment of the present disclosure.
FIG. 15 is a schematic structural diagram of a communication apparatus according to an embodiment of the present disclosure.

### DETAILED DESCRIPTION OF THE EMBODIMENTS

### COMMUNICATION SYSTEM

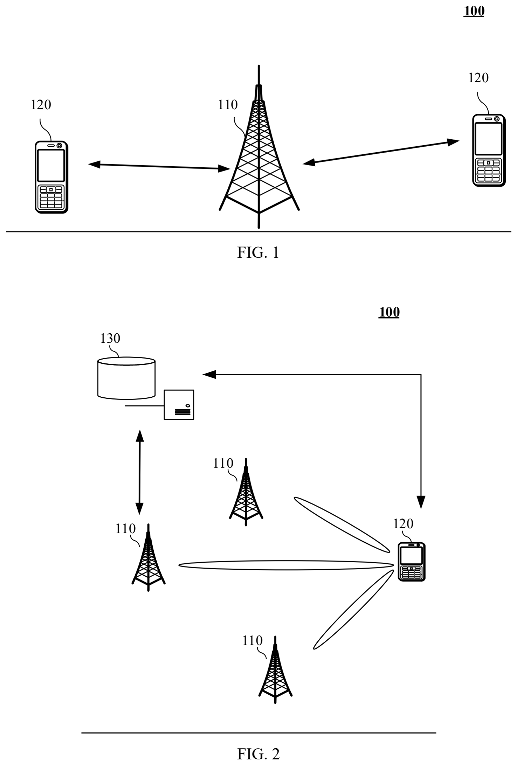

FIG. 1 is a wireless communication system 100 applied in embodiments of the present disclosure. The wireless communication system 100 includes a base station 110 and a terminal device 120, and the base station 110 may be a device that communicates with the terminal device 120. The base station 110 provides communication coverage for a particular geographic area and communicates with the terminal device 120 located within the coverage area.

FIG. 1 exemplarily shows a base station and two terminals. Optionally, the wireless communication system 100 may include a plurality of base stations, and the coverage of each base station may include other numbers of terminals, which is not limited in the embodiments of the present disclosure.

Optionally, the wireless communication system 100 may further include another network entity such as a network controller, a mobility management entity, etc., which is not limited in the embodiments of the present disclosure.

It should be understood that the technical solutions in the embodiments of the present disclosure may be applied to various communication systems, for example, a 5^{th} generation (5G) or new radio (NR) system, a long term evolution (LTE) system, an LTE frequency division duplex (FDD) system, an LTE time division duplex (TDD) system, and the like. The technical solutions provided in the present disclosure may further be applied to a future communication system such as a sixth-generation mobile communication system, a satellite communication system, or the like.

The terminal device in the embodiments of the present disclosure may also be referred to as user equipment (UE), an access terminal, a subscriber unit, a subscriber station, a mobile station (MS), a mobile terminal (MT), a remote station, a remote terminal, a mobile device, a user terminal, a terminal, a wireless communication device, a user agent, or a user equipment. The terminal device in the embodiments of the present disclosure may be a device that provides voice and/or data connectivity to a user, and may be used to connect a person, an object, and a machine, for example, a handheld device or a vehicle-mounted device having a wireless connection function. The terminal device in the embodiments of the present disclosure may be a mobile phone, a pad, a notebook computer, a palmtop computer, a mobile internet device (MID), a wearable device, a virtual reality (VR) device, an augmented reality (AR) device, a wireless terminal in industrial control, a wireless terminal in self-driving, a wireless terminal in a remote medical surgery, a wireless terminal in a smart grid, a wireless terminal in transportation safety, a wireless terminal in a smart city, a wireless terminal in smart home, etc. Optionally, the UE may serve as a base station. For example, the UE may serve as a scheduling entity that provides a sidelink signal between UEs in vehicle-to-everything (V2X), device-to-device (D2D), or the like. For example, cellular phones and automobiles communicate with each other using sidelink signals. The cellular phone communicates with the smart home device without relaying communication signals through the base station.

The base station in the embodiments of the present disclosure may be a device configured to communicate with the terminal, and the base station may also be referred to as an access network device or a radio access network device. The base station in the embodiments of the present disclosure may refer to a radio access network (RAN) node (or device) that accesses the terminal device to a wireless network. The base station may broadly cover various names in the following or be replaced with the following names. For example, a node B (NodeB), an evolved NodeB (eNB), a next generation NodeB (gNB), a relay station, an access point, a transmitting and receiving point (TRP), a transmitting point (TP), a master station (MeNB), a secondary station (SeNB), a multistandard radio (MSR) node, a femtocell, a network controller, an access node, a wireless node, an access point (AP), a transmission node, a transceiver node, a base band unit (BBU), a remote radio unit (RRU), an active antenna unit (AAU), a remote radio unit (RRH), a central unit (CU), a distributed unit (DU), a positioning node, and the like. The base station may be a macro base station, a micro base station, a relay node, a donor node or the like, or a combination thereof. The base station may also refer to a communication module, a modem, or a chip for being disposed in the foregoing device or apparatus. The base station may also be a mobile switching center and a device that plays a role of the base station in the D2D, V2X, and machine-to-machine (M2M) communication, a network side device in a 6G network, and a device that plays a role of the base station in a future communication system, etc. The base station supports networks of the same or different access technologies. The specific technology adopted by the base station and a specific form of the device in the embodiments of the present disclosure are not limited in the embodiments of the present disclosure.

The base station may be fixed or mobile. For example, a helicopter or drone may be configured to serve as a mobile base station, and one or more cells move according to the position of the mobile base station. In other examples, a helicopter or drone may be configured to serve as a device in communication with another base station.

In some deployments, the base station in the embodiments of the present disclosure may refer to the CU or the DU, or the base station includes the CU and the DU. The gNB may also include the AAU.

The base station and the terminal device may be deployed on land, including indoor or outdoor, handheld or vehicle-mounted, may be deployed on a water surface, and may also be deployed on an aircraft, a balloon, and a satellite in the air. A scenario in which the base station and the terminal device are located is not limited in the embodiments of the present disclosure.

### POSITIONING TECHNIQUES IN COMMUNICATION SYSTEM

The terminal device needs to be located in some application scenarios. For example, logistics monitoring, vehicle management, public safety, weather forecast, auxiliary navigation, automatic driving, and the like.

According to different positioning accuracy, the positioning manner may include coarse positioning and fine positioning. The embodiment of the present disclosure mainly describes a coarse positioning manner. A common coarse positioning manner may include cell-id based positioning, which may also be referred to as CID positioning. An implementation principle thereof may be as follows: a positioning platform transmits signaling to a core network to query an ID of a cell where the terminal device is located, and then the positioning platform may determine an approximate position of the terminal device based on data stored in a base station almanac (BSA). The positioning accuracy of this positioning manner depends on the size of the base station or the cell, generally ranging from hundreds to thousands of meters. Compared to high-accuracy positioning, the coarse positioning service has relatively low complexity.

Cell-id based positioning technology has a problem of low positioning accuracy. In order to improve the positioning accuracy, an enhanced CID (E-CID) positioning technology appears. E-CID refers to adding additional information (such as angle-of-arrival (AOA) and timing advance (TA), etc.) to perform auxiliary positioning on the basis of the cell-id, thereby improving positioning accuracy. The E-CID positioning technology may include cell-id+AOA, cell-id+TA, cell-id+AOA+TA, and the like. E-CID may merge the two kinds of positioning information through a fitting model to obtain final positioning information.

Referring to FIG. 2, the communication system 100 may further include a positioning device 130, and the positioning device 130 may be configured to determine position information of the terminal device. The positioning device 130 may be located in a core network. The positioning device 130 may sometimes be referred to as a location server. Taking an NR system as an example, the positioning device 130 may be a location management function (LMF). Taking another communication system as an example, the positioning device 130 may be a location management unit (LMU), a location management center (LMC), or an evolved serving mobile location center (E-SMLC). It should be understood that the positioning device 130 may alternatively be another network element, node, or device that is configured to determine position information of the terminal device, for example, may be a network element or a node that is used to determine position information of the terminal device in a future communication system. A name of the positioning device is not specifically limited in the embodiments of the present disclosure.

The positioning technology in the communication system 100 may include uplink positioning and downlink positioning. Some communication systems (such as the NR system) perform downlink positioning based on a pilot signal transmitted by a base station. The pilot signal may be referred to as a downlink pilot signal. The pilot signal may include, for example, a positioning reference signal (PRS) or a preamble. The PRS may also be referred to as a downlink positioning reference signal (DL-PRS), which is a reference signal for a positioning function. For example, in a downlink positioning process, the terminal device 120 may first measure pilot signals transmitted by a serving cell and a neighboring area (or referred to as a neighboring cell) and estimate related information of positioning measurement. Then, the terminal device 120 may report the related information of the positioning measurement as a measurement result of the pilot signals to the positioning device 130. The positioning device 130 may calculate a position of the terminal device 120 according to the related information of the positioning measurement reported by the terminal device 120, to obtain the position information of the terminal device 120.

Some communication systems (such as the NR system) perform uplink positioning based on a pilot signal transmitted by the terminal device. The pilot signal may be referred to as an uplink pilot signal. The pilot signal may be, for example, a sounding reference signal (SRS). For example, in an uplink positioning process, the terminal device 120 transmits a pilot signal. A base station 110 (a base station of the serving cell and a base station of the neighboring cell) may obtain a measurement result according to the pilot signal transmitted by the terminal. The measurement result of the pilot signal may include related information of positioning measurement. Then, the base station 110 may transmit the related information of the positioning measurement to the positioning device 130, and the positioning device 130 may calculate a position of the terminal device 120 according to the related information of the positioning measurement reported by the base station 110, to obtain position information of the terminal device 120.

The related information of the positioning measurement may include one or more of: time information, distance information, power information, and angle information. More specifically, the related information of the positioning measurement may include one or more of: time of arrival (TOA), time difference of arrival (TDOA), angle difference of arrival (DOA), reference signal receive power (RSRP), path loss between the terminal device and the base station, TA, and the like. The path loss between the terminal device and the base station may be determined based on a difference between a transmit power of a transmit end and a receive power of a receive end.

Taking the related information of the positioning measurement including TA as an example, the positioning device may determine the distance between the terminal device and one or more base stations based on the TA corresponding to the terminal device and one or more base stations. Furthermore, the positioning device may determine a position of the terminal device based on the distance between the terminal device and the one or more base stations, as well as the position of the one or more base stations.

Taking the path loss as an example, the positioning device may determine a distance between the terminal device and one or more base stations based on the path loss between the terminal device and one or more base stations. In some embodiments, the positioning device may determine a distance between the terminal device and one or more base stations through a path loss fitting formula. Furthermore, the positioning device may determine a position of the terminal device based on the distance between the terminal device and one or more base stations, as well as the position of the one or more base stations.

With the development of technology, the application of positioning technology is becoming more and more widespread. Currently, positioning technology is mainly applied in the field of navigation, such as the field of autonomous driving. A key factor in evaluating navigation performance is the ability to provide safe navigation. The ability for safe navigation means that the positioning device must have a high level of trust in its estimated position. The credibility of position estimation is a study of positioning integrity. According to TR 22.872, positioning integrity is defined as a level of trust in the accuracy of the position-related data provided by the positioning system, as well as the ability to provide timely warnings to the positioning device when the positioning system does not meet expected operating conditions.

In addition to positioning integrity, another evaluation indicator of navigation performance is positioning accuracy. The positioning accuracy and the positioning integrity are related but independent concepts. An error percentage distribution of accuracy may be represented by an error distribution of system performance of the positioning device. For example, a UE positioning client of a road vehicle may report that the positioning accuracy is such that a positioning error is less than 50cm in 95% of cases. That is, the UE indicates that 95% of the time its estimated accuracy is better than 50cm. For the remaining 5% of cases, the positioning error is unknown. In fact, the error may reach hundreds of meters due to different error sources. That is, for the remaining 5% of cases, the error is essentially unbounded and its distribution cannot be reliably verified. Due to the existence of this 5% error, simply meeting the accuracy requirements may not be sufficient to meet the usage requirements for many positioning request devices.

As is be learned from the foregoing description, in order to provide safe navigation capability for the positioning request device, a positioning integrity evaluation indicator is introduced. Each time a position is provided for the positioning request device, positioning integrity may be used to quantify the reliability and/or integrity of the provided position. The positioning integrity is a way to constrain the error, indicating the confidence that can be achieved. The positioning integrity requires the capability of providing timely warnings to the positioning request device when the system reliability and/or integrity (or positioning accuracy) do not meet the requirements, which reflects the relatively harsh performance requirements of the positioning request device on the navigation system, and has very important significance in the fields of aviation, aerospace, transportation and the like.

The positioning integrity may generally be represented by four indicators such as an integrity risk, an alert limit, a time to alert, and a protection level.

Integrity risk (IR) refers to a probability that the positioning error exceeds an alert limit but does not issue an alert. IR = Probability/Time.

The integrity risk may be a target integrity risk (TIR). For example, a TIR of 10⁻²/hour indicates a 99% probability that no hazardous misleading output occurs within a given operating hour. TIR sets a target for determining events of concern that need to be monitored. Lower TIR results in a wider threat (i.e., events of concern), therefore, monitoring these threats is necessary to improve the information on the estimated position.

The alert limit (AL) represents a maximum critical deviation that the system can tolerate.

The time to alarm (TTA) represents a maximum allowable time from when the system exceeds an allowed value to when the device issues an alert.

The protection level (PL) refers to a calculated statistical boundary error, so that the probability that an absolute error exceeds a given value (AL) is less than or equal to IR. PL is generally divided into a horizontal protection level and a vertical protection level.

It is learned from the foregoing that the positioning system may issue an alert to the positioning request device when the reliability and/or the integrity of the system do not meet the requirements. However, there is currently no clear solution for how to indicate the reliability and/or integrity to the positioning request device.

Based on this, the embodiments of the present disclosure provide a method and apparatus for positioning, which indicate reliability and/or integrity of a positioning result to a positioning request device through one or more of a number of base stations, a positioning error, and a positioning error level, so as to provide a clear solution for indicating the reliability and/or integrity.

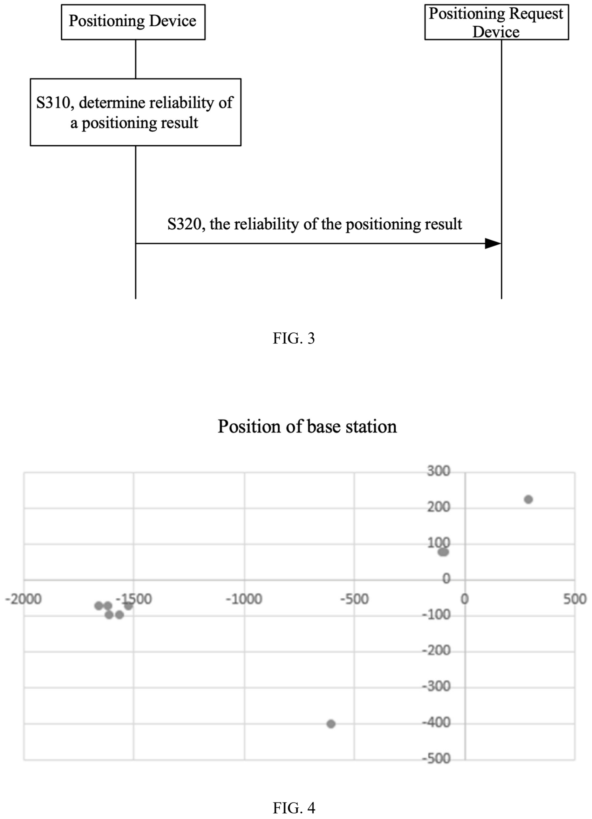

The following describes a method for positioning according to an embodiment of the present disclosure with reference to FIG. 3. The method shown in FIG. 3 is applied at a positioning device and a positioning request device.

A type of the positioning device is not specifically limited in the embodiments of the present disclosure. For example, the positioning device may be a device provided by an operator or may be a device provided by a third-party mechanism. The positioning device may be, for example, the LMF, LMU, LMC, or E-SMLC. It should be understood that the positioning device may alternatively be another network element, node, or device that is configured to determine position information of the terminal device, for example, may be a network element or a node that is used to determine position information of the terminal device in a future communication system, or may be an independently deployed positioning device dedicated to position calculation. A name of the positioning device is not specifically limited in the embodiments of the present disclosure, for example, may also be referred to as a location server or a location calculation server.

The positioning request device may be a device that initiates a positioning request. For example, the positioning request device may transmit the positioning request to the positioning device to obtain a position of the terminal device. The positioning request device may also be referred to as a positioning request unit, a positioning service request unit, a positioning service request device, or the like. A name of the positioning request device is not specifically limited in the embodiments of the present disclosure.

The positioning request device may be any device that needs to obtain the position information of the terminal device. The positioning request device may be a positioning client. The positioning request device may be, for example, a network device or a terminal device. In some embodiments, the positioning request device may be a positioning client running in the terminal device, or the positioning request device may be a service end that communicates with the positioning client.

In a possible scenario, when the positioning client runs in the terminal device, the positioning client may initiate its own positioning, in this case, the terminal device may transmit a positioning request, and the terminal device itself is the device transmitting the positioning request. In another possible scenario, when the positioning client runs in the terminal device, the service end communicating with the positioning client initiates positioning of the terminal running the positioning client, and in this case, the positioning request may be transmitted by a server running the service end, and the server running the service end is the device transmitting the positioning request.

The terminal device may be a vehicle (such as an autonomous vehicle), an electronic device, an Internet of Things device, a wearable device, or the like.

Referring to FIG. 3, the method shown in FIG. 3 includes operations S310 to S320.

At operation S310, a positioning device determines reliability and/or integrity of a positioning result.

The positioning result may be a positioning result for a terminal device. The positioning result may include position information of the terminal device.

A manner of positioning the terminal device is not specifically limited in the embodiments of the present disclosure. For example, the terminal device may be positioned in the uplink positioning manner or the downlink positioning manner described above.

Taking the downlink positioning as an example, the terminal device may measure a pilot signal (such as a PRS or a preamble) transmitted by the base station. The terminal device not only measures a pilot signal transmitted by the serving cell, but also measures a pilot signal transmitted by the neighboring cell. The terminal device may transmit the measurement result of the pilot signal transmitted by each base station to the positioning device, and the positioning device positions the terminal device according to the measurement result.

Taking the downlink positioning as an example, the terminal device may transmit a pilot signal (such as an SRS) to the base station. The base station of the serving cell and/or the base station of the neighboring cell may measure the pilot signal transmitted by the terminal device to obtain a measurement result. The base station of the serving cell and/or the base station of the neighboring cell may transmit the measurement result to the positioning device, and the positioning device positions the terminal device according to the measurement result.

The measurement result may include one or more of: time information, distance information, power information, and angle information. More specifically, the measurement result may include one or more of: TOA, TDOA, ADOA, RSRP, path loss between the terminal device and the base station, TA, and the like.

In some embodiments, the reliability and/or integrity of the positioning result may be represented by positioning accuracy.

At operation S320, the positioning device transmits the reliability and/or integrity of the positioning result to a positioning request device.

The reliability and/or integrity of the positioning result may reflect trustworthiness of the positioning result. By transmitting the reliability and/or integrity of the positioning result to the positioning request device, the positioning request device may take corresponding measures according to the reliability and/or integrity of the positioning result, to avoid a navigation accident when a deviation of the positioning result is large.

The reliability and/or integrity of the positioning result may be indicated by one or more of: a number of base stations participating in positioning, a positioning error, and a positioning error level.

In some embodiments, the positioning device may transmit one or more of the number of base stations participating in positioning, the positioning error, and the positioning error level to the positioning request device. After receiving one or more of the number of base stations participating in positioning, the positioning error, and the positioning error level, the positioning request device may determine the reliability and/or integrity of the positioning result.

In some embodiments, before the operation S310, the positioning request device may transmit a positioning request to the positioning device to request to position the terminal device. After receiving the positioning request, the positioning device may position the terminal device to obtain a positioning result.

In some embodiments, the positioning device may also transmit the positioning result to the positioning request device. That is, the positioning device may transmit the positioning result and the reliability and/or integrity of the positioning result to the positioning request device together. After receiving the reliability and/or integrity of the positioning result and the positioning result, the positioning request device may directly use the positioning result if the reliability and/or integrity of the positioning result is relatively high, and the positioning request device may abandon using the positioning result if the reliability and/or integrity of the positioning result is relatively low.

In some embodiments, the larger the number of base stations participating in positioning, the higher the positioning accuracy, and the higher the reliability and/or integrity of the positioning result. Therefore, in the embodiments of the present disclosure, the reliability and/or integrity of the positioning result are indicated through the number of base stations participating in positioning, so that the reliability and/or integrity of the positioning result are accurately reflected.

The number of base stations participating in positioning is not specifically limited in the embodiments of the present disclosure. The number of base stations participating in positioning may be any positive integer. For example, the number of base stations participating in positioning may be 1, 2, 3, 4, 5, or the like.

The number of base stations participating in positioning measurement may be the number of valid base stations. Taking the downlink positioning as an example, if the terminal device measures a plurality of base stations, but some of these base stations are located close to each other, this part of base stations can only have one valid base station. For example, if the terminal device measures 5 base stations, but there are 3 base stations are located close to each other, the 3 base stations can only have one valid base station. In other words, the actual number of valid base stations measured by the terminal device is 3, meaning that the actual number of base stations participating in positioning is 3.

Taking the uplink positioning as an example, if 5 base stations measure the pilot signal transmitted by the terminal device and transmit the measurement result to the positioning device, but if 3 base stations are located close to each other among the 5 base stations, the 3 base stations can only have one valid base station. That is, the actual number of valid base stations participating in positioning is 3.

Taking FIG. 4 as an example, an abscissa and an ordinate of FIG. 4 represent x and y coordinates of the base station, respectively, in meters. Dots in FIG. 4 represent base stations, with a total of 9 base stations, meaning that the terminal device measures downlink positioning pilots from the 9 base stations. As is seen from FIG. 4, there are 5 base stations clustered together at the abscissa of -1500 meters. When performing position calculation, only one of the 5 base stations can participate in the calculation.

In some embodiments, the reliability and/or integrity of the positioning result may be indicated by the positioning error. The larger the positioning error, the lower the positioning accuracy, and the lower the reliability and/or integrity of the positioning result. The smaller the positioning error, the higher the positioning accuracy, and the higher the reliability and/or integrity of the positioning result. Therefore, the reliability and/or integrity of the positioning result are accurately reflected by indicating the reliability and/or integrity of the positioning result through the positioning error.

The positioning error in the embodiments of the present disclosure may be a specific error value, or may be an error range, which is not specifically limited in the embodiments of the present disclosure.

The positioning error may be related to the number of base stations participating in positioning. In some embodiments, the positioning error may satisfy one or both of: the larger the number of base stations participating in positioning, the smaller the positioning error; and the smaller the number of base stations participating in positioning, the greater the positioning error.

In some embodiments, the number of base stations participating in positioning may be classified into a plurality of tiers, and each tier corresponds to one positioning error. For example, the number of base stations less than 3 is classified into one tier, the number of base stations equal to 3 is classified into one tier, the number of base stations greater than 3 and less than 8 is classified into one tier, and the number of base stations greater than 8 is classified into one tier.

Taking the above tier classification as an example, embodiments of the present disclosure may determine the positioning error based on the above tiers. For another example, when the number of the base stations is less than 3, the positioning error is 4d; when the number of the base stations is 3, the positioning error is 3d; when the number of the base stations is greater than 3 and less than 8, the positioning error is 2d; and when the number of the base stations is greater than 8, the positioning error is 1d. Here, d is an estimated distance error. A value of d is not limited in the embodiments of the present disclosure, for example, the value of d may be 1m, 1cm, 10m, etc.

The above tier classification is merely an example, and certainly, the embodiments of the present disclosure may further perform tier classification according to other numbers. For example, the number of base stations equal to 1 is classified into one tier, the number of base stations equal to 2 is classified into one gear, the number of base stations equal to 3 is classified into one tier, and the number of base stations greater than 3 is classified into one tier.

In some embodiments, the reliability and/or integrity of the positioning result may be indicated by the positioning error level. The lower the positioning error level, the lower the positioning accuracy, and the lower the reliability and/or integrity of the positioning result. The higher the positioning error level, the higher the positioning accuracy, and the higher the reliability and/or integrity of the positioning result. Therefore, the reliability and/or integrity of the positioning result are accurately reflected by indicating the reliability and/or integrity of the positioning result through the positioning the error level.

The positioning error level may be related to the number of base stations participating in positioning. In some embodiments, the positioning error level may satisfy one or both of: the larger the number of base stations participating in positioning, the lower the positioning error level; and the smaller the number of base stations participating in positioning, the higher the positioning error level.

In some embodiments, the number of base stations participating in positioning may be classified into a plurality of tiers, and each tier corresponds to one positioning error. For example, the number of base stations less than 3 is classified into one tier, the number of base stations equal to 3 is classified into one tier, the number of base stations greater than 3 and less than 8 is classified into one tier, and the number of base stations greater than 8 is classified into one tier.

Taking the above tier classification as an example, embodiments of the present disclosure may determine the positioning error based on the above tiers. For example, when the number of the base stations is less than 3, the positioning error is 4; when the number of the base stations is 3, the positioning error is 3; when the number of the base stations is greater than 3 and less than 8, the positioning error is 2; and when the number of the base stations is greater than 8, the positioning error is 1.

The above tier classification is merely an example, and certainly, the embodiments of the present disclosure may further perform tier classification according to other numbers. For example, the number of base stations equal to 1 is classified into one tier, the number of base stations equal to 2 is classified into one gear, the number of base stations equal to 3 is classified into one tier, and the number of base stations greater than 3 is classified into one tier.

The positioning error and the positioning error level in the embodiments of the present disclosure may be determined based on the same base station number tier or may be determined based on different base station number tier, which is not specifically limited in the embodiments of the present disclosure.

In some embodiments, the positioning error and/or the positioning error level may be determined by negotiation between the positioning device and the positioning request device or may be predefined in a protocol.

A relationship between the number of base stations and the positioning error and/or the positioning error level in the embodiments of the present disclosure may be obtained through statistics and error estimation. If the positioning mode is E-CID positioning, since a positioning result of the E-CID is obtained through a fitting model, it is necessary to ensure that the fitting model is a calibrated model before determining the positioning error and/or the positioning error level in order to ensure the accuracy of the positioning error and/or the positioning error level, thereby avoiding the impact of an inaccurate fitting model on the judgement of the positioning error and/or the positioning error level.

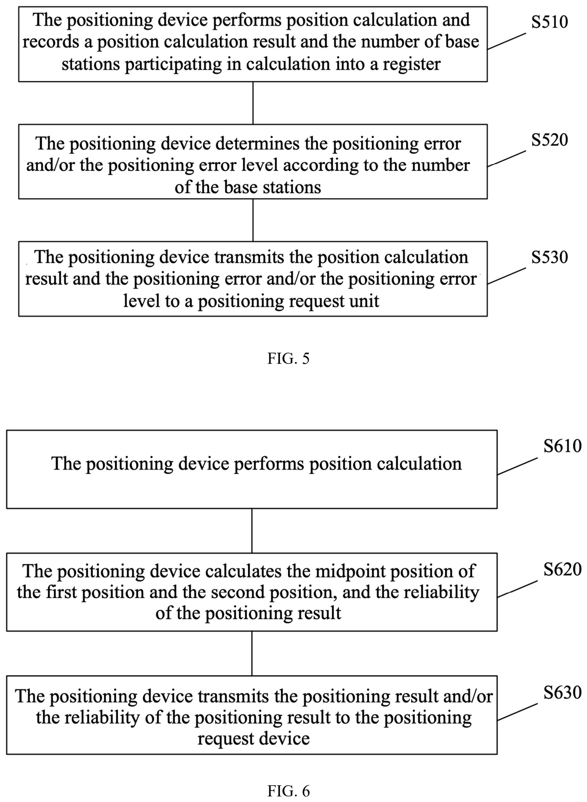

The following describes a method for positioning according to an embodiment of the present disclosure with reference to FIG. 5.

At operation S510, the positioning device performs position calculation and records a position calculation result and a number of base stations participating in calculation into a register.

The information for position calculation by the positioning device may be transmitted by the terminal device to the positioning device or may be transmitted by the base station to the positioning device. The number of base stations participating in calculation may refer to the number of active base stations described above. The position calculation result may refer to a positioning result of the terminal device.

At operation S520, the positioning device determines the positioning error and/or the positioning error level according to the number of the base stations. A specific determining manner may refer to the foregoing descriptions.

At operation S530, the positioning device transmits the position calculation result and the positioning error and/or the positioning error level to a positioning request unit.

In some embodiments, the positioning device may transmit the position calculation result and the positioning error and/or the positioning error level to the terminal device.

Generally, when positioning the terminal device, at least three widely spaced base stations are required to determine the position of the terminal device. When two of the three base stations are located close to each other, triangulation cannot be applied for positioning and a unique position estimation cannot be obtained, resulting in a relatively large error in the positioning result of the terminal device. Or sometimes the terminal device only measures the downlink positioning pilot signal transmitted by one or two base stations, at which time there may be a relatively large error in the positioning result.

In light of the above situations, the positioning device needs to notify the positioning request device of the reliability and/or integrity of the positioning result, enabling the positioning request device to determine whether to use the positioning result according to the reliability and/or the integrity.

In some embodiments, the positioning request device may also fuse the positioning results received multiple times to ultimately determine a relatively accurate positioning result. During fusion, the positioning request device may set reasonable weights for the positioning results according to the reliability and/or integrity of the positioning results, so that a final positioning result is more accurate. In some embodiments, when the positioning request device sets the weights, factors such as a movement speed and a motion trajectory of the terminal device may also be considered, which is not specifically limited in the embodiments of the present disclosure.

The following describes a manner of determining the reliability and/or integrity of the positioning result for cases where the number of base stations participating in positioning is 1 and 2, respectively.

If there are 2 base stations participating in positioning, even if the distance estimation (such as the distance estimation between the terminal device and the base station) is accurate, the estimated position of the terminal device will have two points. That is, there are two possible positions of the terminal device. The two possible positions are referred to as a first position and a second position, respectively. When determining the position of the terminal device, the positioning device may have two solutions. Solution 1: The positioning device may select one position from the first position and the second position as a positioning result (or referred to as a position estimation result). Solution 2: The positioning device may use a midpoint position of the first position and the second position as a positioning result.

The estimated position of Solution 1 may have a large variance. Each estimated position of Solution 2 may deviate from a correct value, but with a small variance, which is a solution with higher reliability and/or integrity.

A calculation manner of the reliability and/or integrity of Solution 1 and/or Solution 2 is not specifically limited in the embodiments of the present disclosure. As an example, the reliability and/or integrity may be determined based on a mean of the position errors. If the reliability and/or the integrity are determined based on the mean of the position errors, the means of the position errors for Solution 1 and Solution 2 are the same. As another example, the reliability and/or integrity may be determined based on a variance of the position error or second-order statistics. The variances or the second-order statistics of the position errors for Solution 1 and Solution 2 differ by one time, and the second-order statistic or variance of Solution 1 error is one time that of Solution 2. Reliability and/or Integrity
In some embodiments, the positioning device may determine the positioning result using Solution 2. If the positioning device determines the positioning result using Solution 2, the reliability and/or the integrity of the positioning result may be determined based on the first position and the second position. The first position and the second position are positions determined based on two base stations participating in positioning.

In some embodiments, the reliability and/or integrity of the positioning result may be determined based on a distance between the midpoint position of the first position and the second position and one of the first position and the second position.

The above method for positioning is described below with reference to FIG. 6.

At operation S610, the positioning device performs position calculation. The positioning device may calculate two possible points, i.e., the first position and the second position.

At operation S620, the positioning device calculates the midpoint position of the first position and the second position, and the reliability and/or integrity of the positioning result. The midpoint position is the positioning result estimated by the positioning device. The reliability and/or integrity of the positioning result is determined based on a distance between the midpoint position and one of the first position and the second position.

At operation S630, the positioning device transmits the positioning result and/or the reliability and/or integrity of the positioning result to the positioning request device.

If the number of base stations participating in positioning is 1, the positioning device may determine a position of the base station as the positioning result of the terminal device, i.e., the position of the terminal device is the position of the base station. In this case, the reliability and/or integrity of the positioning result may be determined based on a coverage of the base station participating in the positioning. The coverage of the base station may be transmitted by the base station to the positioning device. For example, the positioning device may transmit a request message to the base station, and the request message is used to obtain related information of the coverage of the base station. After receiving the request message, the base station may transmit the related information of the coverage of the base station to the positioning device. The related information of the coverage may include, for example, an average radius of the coverage.

In some embodiments, the reliability and/or integrity of the positioning result may be determined based on half of the average radius of the coverage of the base station.

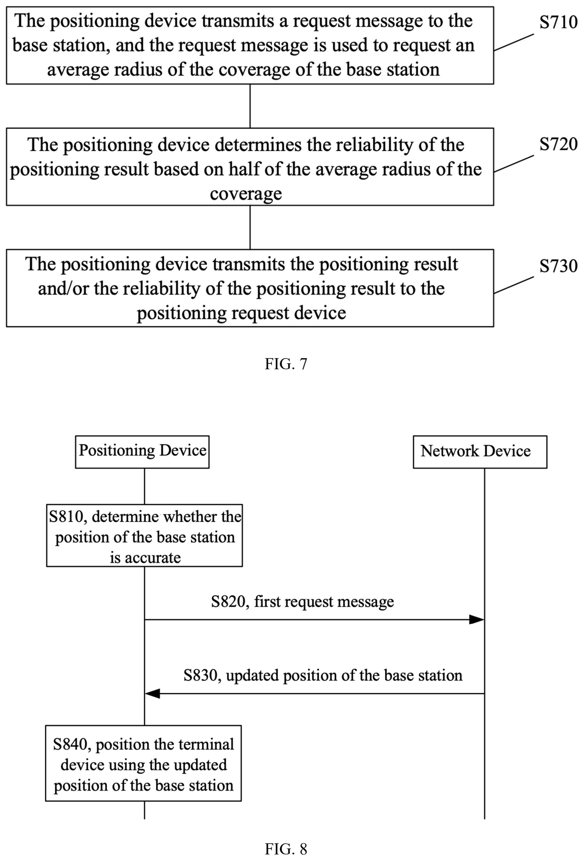

The above method for positioning is described below with reference to FIG. 7.

At operation S710, the positioning device transmits a request message to the base station, and the request message is used to request an average radius of the coverage of the base station.

At operation S720, the positioning device determines the reliability and/or integrity of the positioning result based on half of the average radius of the coverage.

At operation S730, the positioning device transmits the positioning result and/or the reliability and/or integrity of the positioning result to the positioning request device.

In some embodiments, the reliability and/or integrity of the positioning result is related to first information. The first information is not specifically limited in the embodiments of the present disclosure. The first information is related to the base station participating in positioning. For example, the first information may be related to one or more of: a number of base stations participating in positioning, a position of the base station, a height of the base station, an antenna direction of the base station, and the coverage of the base station, etc.

For the coverage of the base station, how to determine the reliability and/or integrity of the positioning result based on the coverage of the base station has been described above with reference to FIG. 7.

In some embodiments, the larger the number of base stations participating in positioning, the higher the positioning accuracy, and the higher the reliability and/or integrity of the positioning result; the smaller the number of base stations participating in positioning, the lower the positioning accuracy, and the lower the reliability and/or integrity of the positioning result.

For the position of the base station, a manner of determining the reliability and/or integrity of the positioning result based on the position of the base station is described below with reference to FIG. 8 to FIG. 11.

It is learned from the foregoing that the positioning may be performed based on the position of the base station in the embodiments of the present disclosure, but in practice, due to some various factors, the position of the base station may be inaccurate. For example, the position of the base station is updated, but a base station database does not update the position of the base station, and the positioning device does not obtain an updated position of the base station. When the position calculation is performed, due to the deviation of the position of the base station, the calculated position has a large deviation. For another example, the positioning device is a device provided by a non-operator, the positioning device does not obtain a real position of the base station due to confidentiality requirements, that is, all base station positions are deviated, which also causes a large deviation in the final calculated position.

For the above two cases where the positions of the base stations are inaccurate, corresponding solutions are respectively provided in the present disclosure.

FIG. 8 is a method for positioning according to an embodiment of the present disclosure, where the positioning device may request the updated position of the base station from the network device in a case that the position of the base station is inaccurate, so that the position calculation may be performed using the updated position of the base station, thereby making the calculation result more accurate.

Referring to FIG. 8, at operation S810, the positioning device determines whether the position of the base station is accurate.

At operation S820, when the position of the base station is inaccurate, the positioning device transmits a first request message to a network device. The first request message is used to request to update the position of the base station.

The network device in the embodiments of the present disclosure may be any device that can obtain the position of the base station. The network device may be a base station, a core network element, or the like.

At operation S830, the network device transmits an updated position of the base station to the positioning device.

At operation S840, the positioning device positions the terminal device using the updated position of the base station.

When determining that the position of the base station is inaccurate, the positioning device may request to update the position of the base station and position the terminal device using the updated position of the base station, thereby improving the reliability and/or integrity of the positioning result.

There are a plurality of manners for the positioning device to determine whether the position of the base station is accurate, which is not specifically limited in the embodiments of the present disclosure. In some embodiments, the positioning device may determine whether the position of the base station is accurate based on the long-term positioning result. In some embodiments, the positioning device may determine the positioning result based on two different positioning manners and determine whether the position of the base station is accurate according to two positioning results. One of the above two positioning manners is a positioning manner based on the position of the base station.

As an example, the positioning device may determine a first distance between a first device and the base station based on a position of the first device and the position of the base station. The positioning device may determine a second distance between the first device and the base station based on related information of positioning measurement between the first device and the base station. The positioning device may determine whether the position of the base station is accurate based on the first distance and the second distance.

The first device may be a device with a known position, or a device that the positioning device is able to obtain its accurate position. For example, the first device may be a reference unit, such as a road side unit.

The related information of the positioning measurement may include, for example, one or more of: time information, distance information, power information, and angle information. More specifically, the related information of the positioning measurement may include one or more of: TOA, TDOA, ADOA, RSRP, path loss between the first device and the base station, TA, and the like.

It is learned from the foregoing that the positioning device may determine the distance between the first device and the base station in two manners, where the first distance is a distance determined based on the position of the base station, the second distance is a relatively accurate distance, and whether the position of the base station is accurate may be determined based on the first distance and the second distance.

In some embodiments, whether the position of the base station is accurate may be determined based on a correlation between the first distance and the second distance. If the correlation between the first distance and the second distance is relatively high, the position of the base station is accurate. If the correlation between the first distance and the second distance is relatively low, the position of the base station is inaccurate.

In some embodiments, whether the position of the base station is accurate may be determined by setting a correlation threshold. If the correlation between the first distance and the second distance is less than a preset threshold, the position of the base station is inaccurate. If the correlation between the first distance and the second distance is greater than or equal to the preset threshold, the position of the base station is accurate.

It should be noted that the correlation between the first distance and the second distance may refer to a correlation between the first distances and the second distances at different moments. For example, the first distances determined at different moments are drawn into a first curve, the second distances determined at different moments are drawn into a second curve, and the correlation between the first distances and the second distances is the correlation between the first curve and the second curve.

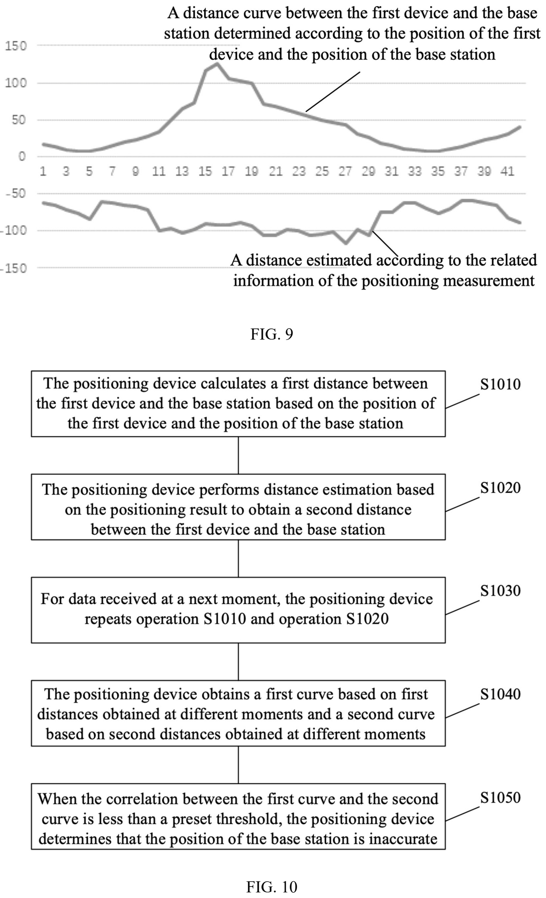

The following describes with reference to FIG. 9. In the two curves shown in FIG. 9, one curve represents the distance between the first device and the base station determined according to the position of the first device and the position of the base station, and the other curve represents the distance estimated according to the related information of the positioning measurement. As is seen from FIG. 9, the correlation between the two curves is relatively small, and therefore, the positioning device may determine that the position of the base station is inaccurate. If the inaccurate position of the base station continues to be used for positioning, the reliability and/or integrity of the positioning result will be affected.

The following describes another method for positioning according to an embodiment of the present disclosure with reference to FIG. 10.

Referring to FIG. 10, at operation S1010, the positioning device calculates a first distance between the first device and the base station based on the position of the first device and the position of the base station.

At operation S1020, the positioning device performs distance estimation based on the positioning result to obtain a second distance between the first device and the base station.

At operation S1030, for data received at a next moment, the positioning device repeats operation S1010 and operation S1020.

At operation S1040, the positioning device obtains a first curve based on first distances obtained at different moments and obtains a second curve based on second distances obtained at different moments. The positioning device calculates an inner product of the first curve and the second curve, to obtain a correlation between the first curve and the second curve.

At operation S1050, when the correlation between the first curve and the second curve is less than a preset threshold, the positioning device determines that the position of the base station is inaccurate. The positioning device transmits a request message to the network device to request to calibrate the position of the base station.

The foregoing describes whether the position of the base station is accurate by taking the first distance and the second distance as an example, and the embodiments of the present disclosure are not limited thereto. For example, the positioning device may determine two positions of the first device based on two manners and determine whether the position of the base station is accurate based on the two positions of the first device. One manner is to directly obtain the position of the first device from the first device, and the other manner is to determine the position of the first device based on the position of the base station.

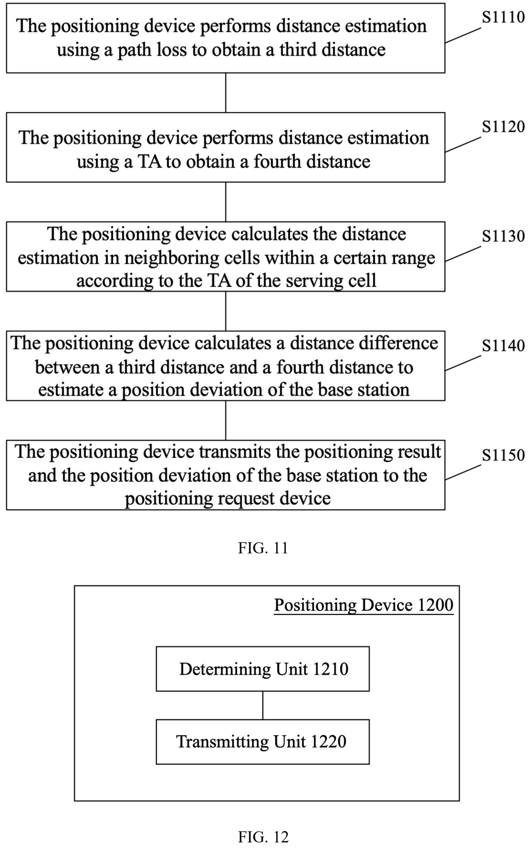

For the positioning device being the device provided by the third-party mechanism, due to the fact that the positioning device cannot obtain the accurate position of the base station, the positions of all the base stations may deviate. In addition, the larger the coverage of the base station, the greater the position deviation of the base station. Prior to positioning, the positioning device may calibrate the position of the base station. However, even after calibration, the position of the base station may still have errors. For this case, an embodiment of the present disclosure provides a method for determining the reliability and/or integrity of the positioning result, as shown in FIG. 11.

Referring to FIG. 11, at operation S1110, the positioning device performs distance estimation using a path loss to obtain a third distance between the terminal device and the base station. The base station may include a base station corresponding to the serving cell and/or a base station corresponding to the neighboring cell.

At operation S1120, the positioning device performs distance estimation using a TA of the serving cell to obtain a fourth distance between the terminal device and the base station corresponding to the serving cell.

At operation S1130, the positioning device calculates a fourth distance between the base station corresponding to the neighboring cell and the terminal device according to the TA of the serving cell.

A distance between the base station corresponding to the neighboring cell and the base station corresponding to the serving cell is less than or equal to a preset distance. For example, the preset distance may be 40m. When the distance between the base station corresponding to the neighboring cell and the base station corresponding to the serving cell is small, the terminal device may assume that the distance between the terminal device and the base station corresponding to the serving cell is approximately equal to the distance between the terminal device and the base station corresponding to the neighboring cell.

At operation S1140, the positioning device calculates a distance difference between a third distance and a fourth distance to estimate a position deviation of the base station.

When distance estimation is performed based on the path loss, a path loss fitting model needs to be determined. In general, the path loss fitting model is determined based on the position of the base station and the position of the terminal in practice, and the position of the terminal may come from another positioning system, such as a global navigation satellite system (GNSS). It is generally believed that the position of the terminal is accurate. In the following description, a terminal with a known accurate position is referred to as a reference terminal. When the position of the base station is deviated, a distance between the reference terminal and the base station is inaccurate, so that a fitting formula is inaccurate. During actual measurement, the distance obtained using the fitting formula and the path loss is different from the distance obtained using the TA. The reliability and/or integrity of the positioning result may be determined based on the difference.

For the neighboring cell, the terminal device may measure the path loss of the neighboring cell and determine the third distance between the terminal device and the base station corresponding to the neighboring cell. In addition, the terminal device may further determine a fourth distance between the terminal device and the base station corresponding to the neighboring cell based on the TA of the serving cell. The position deviation of the base station corresponding to the neighboring cell may be determined using the third distance and the fourth distance. When the distance between the base station corresponding to the neighboring cell and the base station corresponding to the serving cell is less than a certain range, the terminal device may further determine the fourth distance between the terminal device and the base station corresponding to the neighboring cell based on the TA of the serving cell.

At operation S1150, the positioning device transmits the positioning result and the position deviation of the base station to the positioning request device.

The above describes how to determine the reliability and/or integrity of the positioning result based on the number of base stations participating in positioning, the position of the base station, and the coverage of the base station. The following describes how to determine the reliability and/or integrity of the positioning result based on the height of the base station and the antenna direction of the base station.

When performing position calculation, the positioning device needs to consider the height of the base station and the antenna direction of the base station. Generally, each base station may transmit the height of the base station and the antenna direction of the base station to the positioning device to enable the positioning device to perform position calculation. However, in some cases, due to the variability of the antenna direction, the positioning device cannot perform position calculation using an accurate antenna direction, or the positioning device cannot obtain height information of the base station, such information loss may result in low accuracy and low reliability and/or integrity of the positioning result.

The position of the terminal device may be determined based on the fitting formula, and the fitting formula is related to the antenna direction of the base station and/or the height of the base station. When the antenna direction of the base station and/or the height of the base station are inaccurate, a fitting error (i.e., the positioning error) is relatively large. For example, the height of the base station may affect a fitting factor (also referred to as a fading factor) of the fitting formula, and the higher the base station, the smaller the fitting factor. When the height of the base station is unknown, the fitting factor cannot be accurately determined, so that an accurate fitting formula cannot be obtained. The fitting factor and a logarithm of the distance have a multiplication relationship, and therefore, the above fitting factor may also be referred to as a multiplicative factor. The antenna direction of the base station may affect an additive gain in the fitting formula, and when the antenna direction of the base station is uncertain, the additive gain cannot be accurately determined, so that the accurate fitting formula cannot be obtained.

In some embodiments, the positioning device may adjust the fitting factor and/or the additive gain based on positioning results of a period of time. For example, the positioning device may position the terminal device using a plurality of base stations to obtain a plurality of positioning results and adjust the fitting factor and/or the additive gain based on the plurality of positioning results. Furthermore, the positioning device may infer the height of the base station based on a relationship between the fitting factor and the height of the base station. The positioning device may determine a new fitting formula based on a new fitting factor. In addition, due to the additive relationship between the antenna gain and the distance logarithm, the positioning device may adjust the additive gain according to the plurality of positioning results to determine the new fitting formula.

In some embodiments, the positioning device may jointly adjust the fitting factor and the additive gain according to the plurality of positioning results, to obtain the new fitting formula.

The positioning device may determine the reliability and/or integrity of a parameter of the base station based on the new fitting formula, and the parameter of the base station may include the height of the base station and/or the antenna direction of the base station. For example, the positioning device may determine the distance between the terminal device and the base station based on the position of the terminal device after the position solution, and compare the distance with a distance calculated using the new fitting formula, to determine the reliability and/or integrity of the parameter of the base station in the fitting formula. The reliability and/or integrity may be determined based on a difference between the two distances. The positioning device may transmit the reliability and/or integrity of the parameter of the base station to the positioning request device.

In some embodiments, the reliability and/or integrity may further consider the number of samples of the positioning result. When the difference between the two distances is the same, the greater the number of samples, the higher the reliability and/or integrity; and the less the number of samples, the lower the reliability and/or integrity. The distance between the position of the terminal device after the position calculation and the base station is referred as to a calculated distance. In cases with fewer samples, even if both the calculated distance and the distance obtained using the new fitting formula are inaccurate, the difference between the two distances may still be relatively small. Therefore, when the reliability and/or integrity (such as the distance difference) of the positioning request device is notified, the positioning request device may be notified to obtain the number of samples of the difference.

The method embodiments of the present disclosure are described in detail above with reference to FIG. 1 to FIG. 11, and the apparatus embodiments of the present disclosure are described in detail below with reference to FIG. 12 to FIG. 15. It should be understood that descriptions of the method embodiments correspond to descriptions of the apparatus embodiments, and therefore, reference may be made to the above method embodiments for parts that are not described in detail.

FIG. 12 is a schematic block diagram of a positioning device according to an embodiment of the present disclosure. The positioning device 1200 shown in FIG. 12 may be any one of the positioning devices described above. The positioning device 1200 may include a determining unit 1210 and a transmitting unit 1220.

The determining unit 1210 is configured to determine reliability and/or integrity of a positioning result.

The transmitting unit 1220 is configured to transmit the reliability and/or the integrity of the positioning result to a positioning request device.

The reliability and/or integrity of the positioning result is indicated by one or more of: a number of base stations participating in positioning, a positioning error, and a positioning error level.

In some embodiments, the positioning error is related to the number of base stations participating in positioning.

In some embodiments, the positioning error satisfies one or both of: the larger the number of base stations participating in positioning, the smaller the positioning error; and the smaller the number of base stations participating in positioning, the greater the positioning error.

In some embodiments, the positioning error level is related to the number of base stations participating in positioning.

In some embodiments, the positioning error level satisfies one or both of: the larger the number of base stations participating in positioning, the higher the positioning error level; and the smaller the number of base stations participating in positioning, the lower the positioning error level.

In some embodiments, the reliability and/or integrity of the positioning result is related to one or more of: the number of base stations participating in positioning; a position of the base station; a height of the base station; and an antenna direction of the base station.

In some embodiments, if the number of base stations participating in positioning is 2, the reliability and/or integrity of the positioning result is determined based on a first position and a second position, and the first position and the second position are determined based on the 2 base stations participating in positioning.

In some embodiments, the reliability and/or integrity of the positioning result is determined based on a distance between a midpoint position of the first position and the second position and one of the first position and the second position.

In some embodiments, if the number of base stations participating in positioning is 1, the reliability and/or integrity of the positioning result is determined based on a coverage of the base station participating in positioning.

In some embodiments, the reliability and/or integrity of the positioning result is determined based on half of an average radius of the coverage.

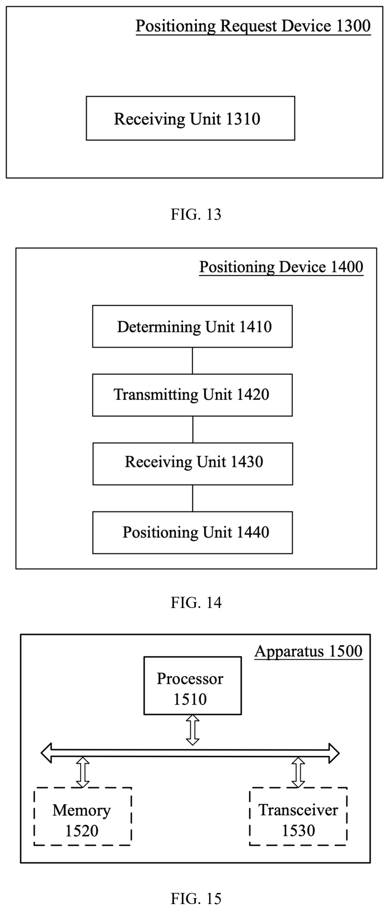

FIG. 13 is a schematic block diagram of a positioning request device according to an embodiment of the present disclosure. The positioning request device 1300 shown in FIG. 13 may be any positioning request device described above. The positioning request device 1300 may include a receiving unit 1310.

The receiving unit 1310 is configured to receive reliability and/or integrity of a positioning result transmitted by a positioning device.

The reliability and/or integrity of the positioning result is indicated by one or more of: the number of base stations participating in positioning, a positioning error, and a positioning error level.

In some embodiments, the positioning error is related to the number of base stations participating in positioning.

In some embodiments, the positioning error satisfies one or both of: the larger the number of base stations participating in positioning, the smaller the positioning error; and the smaller the number of base stations participating in positioning, the greater the positioning error.

In some embodiments, the positioning error level is related to the number of base stations participating in positioning.

In some embodiments, the positioning error level satisfies one or both of: the larger the number of base stations participating in positioning, the higher the positioning error level; and the smaller the number of base stations participating in positioning, the lower the positioning error level.

In some embodiments, the reliability and/or integrity of the positioning result is related to one or more of: the number of base stations participating in positioning; a position of the base station; a height of the base station; and an antenna direction of the base station.

In some embodiments, if the number of base stations participating in positioning is 2, the reliability and/or integrity of the positioning result is determined based on a first position and a second position, and the first position and the second position are determined based on the 2 base stations participating in positioning.

In some embodiments, the reliability and/or integrity of the positioning result is determined based on a distance between a midpoint position of the first position and the second position and one of the first position and the second position.

In some embodiments, if the number of base stations participating in positioning is 1, the reliability and/or integrity of the positioning result is determined based on a coverage of the base station participating in positioning.

In some embodiments, the reliability and/or integrity of the positioning result is determined based on half of an average radius of the coverage.

FIG. 14 is a schematic block diagram of a positioning device according to an embodiment of the present disclosure. The positioning device 1400 shown in FIG. 14 may be any one of the positioning devices described above. The positioning device 1400 may include a determining unit 1410, a transmitting unit 1420, a receiving unit 1430, and a positioning unit 1440.

The determining unit 1410 is configured to determine whether a position of a base station is accurate
The transmitting unit 1420 is configured to transmit a first request message to a network device when the position of the base station is inaccurate, where the first request message is used to request to update the position of the base station.

The receiving unit 1430 is configured to receive an updated position of the base station transmitted by the network device.

The positioning unit 1440 is configured to position the terminal device using the updated position of the base station.

In some embodiments, the determining unit is configured to determine a first distance between a first device and the base station based on a position of the first device and the position of the base station, determine a second distance between the first device and the base station based on related information of positioning measurement between the first device and the base station, and determine whether the position of the base station is accurate based on the first distance and the second distance.

In some embodiments, whether the position of the base station is accurate is determined based on a correlation between the first distance and the second distance.

In some embodiments, if the correlation is less than a preset threshold, the position of the base station is inaccurate.

In some embodiments, the related information of the positioning measurement includes a TA and/or a path loss.

FIG. 15 is a schematic structural diagram of an apparatus according to an embodiment of the present disclosure. The dashed line in FIG. 15 indicates that the unit or module is optional. The apparatus 1500 may be configured to implement the method described in the foregoing method embodiments. The apparatus 1500 may be one or more of a chip, a positioning device, a positioning request device, or a terminal device, etc.

The apparatus 1500 may include one or more processors 1510, and the processor 1510 may support the apparatus 1500 to implement the method described in the foregoing method embodiments. The processor 1510 may be a general-purpose processor or a dedicated processor. For example, the processor may be a central processing unit (CPU). Alternatively, the processor may be another general-purpose processor, a digital signal processor (DSP), an application specific integrated circuit (ASIC), a field programmable gate array (FPGA) or other programmable logic devices, a discrete gate or transistor logic device, a discrete hardware component, or the like. The general-purpose processor may be a microprocessor, or the processor may be any conventional processor or the like.

The apparatus 1500 may further include one or more memories 1520 storing a program, and the program may be executed by the processor 1510 to cause the processor 1510 to perform the method described in the foregoing method embodiments. The memory 1520 may be independent of the processor 1510 or may be integrated into the processor 1510.

The apparatus 1500 may further include a transceiver 1530, and the processor 1510 may communicate with another device or chip via the transceiver 1530. For example, the processor 1510 may perform data transceiving with another device or chip via the transceiver 1530.

Embodiments of the present disclosure further provide a computer-readable storage medium, configured to store a program. The computer-readable storage medium may be applied to the positioning device or positioning request device provided in the embodiments of the present disclosure, and the program causes the computer to perform the method performed by the positioning device or positioning request device in the embodiments of the present disclosure.

Embodiments of the present disclosure further provide a computer program product. The computer program product includes a program. The computer program product may be applied to the positioning device or positioning request device provided in the embodiments of the present disclosure, and the program causes the computer to perform the method performed by the positioning device or positioning request device in the embodiments of the present disclosure.

Embodiments of the present disclosure further provide a computer program. The computer program may be applied to the positioning device or positioning request device provided in the embodiments of the present disclosure, and the computer program causes the computer to perform the method performed by the positioning device or positioning request device in the embodiments of the present disclosure.

It should be understood that, in the embodiments of the present disclosure, "B corresponding to A" indicates that B is associated with A, and B may be determined based on A. However, it should be further understood that, determining B based on A does not mean that B is determined only based on A, or B may also be determined based on A and/or other information.

It should be understood that the term "and/or" in this specification is merely an association relationship for describing associated objects, indicating that there are three relationships, e.g., A and/or B may indicate that A exists alone, A and B exist at the same time, and B exists alone. In addition, the character "/" in this specification generally indicates an "or" relationship between the associated objects.

It should be understood that the term "indication" mentioned in the embodiments of the present disclosure may be a direct indication, or may be an indirect indication, or may indicate that there is an association relationship. For example, A indicates B, which may indicate that A directly indicates B, e.g., B is obtained through A, or may indicate that A indirectly indicates B, e.g., A indicates C and B is obtained through C, or may indicate that A and B have an association relationship.

It should be understood that the term "corresponding" in the embodiments of the present disclosure may indicate that there is a direct correspondence or indirect correspondence between the two, or may indicate that there is an association relationship between the two, or may be relationships such as indicating and being indicated, configuring and being configured, etc.

It should be understood that the terms "predefined" and "preconfigured" may be implemented by pre-storing a corresponding code, a table, or another manner that can be used to indicate related information in a device (e.g., a terminal device and a network device), and a specific implementation is not limited in the present disclosure. For example, the predefined may indicate being defined in a protocol.

It should be understood that the term "protocol" in the embodiments of the present disclosure may refer to a standard protocol in the field of communications, such as an LTE protocol, an NR protocol, and related protocols applied to a future communications system, which is not limited in the present disclosure.

It should be understood that, in various embodiments of the present disclosure, a size of a sequence number of each process does not mean an execution sequence, and the execution sequence of each process should be determined by its function and internal logic but should not constitute any limitation on an implementation process of the embodiments of the present disclosure.

In the several embodiments provided in the present disclosure, it should be understood that the disclosed system, apparatus, and method may be implemented in other manners. For example, the apparatus embodiments described above are merely illustrative, and the division of the units is merely a logical function division. In actual implementation, there may be alternative division manners, such as combining a plurality of units or components or integrating them into another system, or ignoring or not executing some features. In addition, the shown or discussed mutual coupling or direct coupling or communication connection may be indirect coupling or communication connection through some interfaces, devices, or units, which may be electrical, mechanical, or in other forms.

The units described as separate parts may or may not be physically separate, and parts shown as units may or may not be physical units, i.e., may be located in one position, or may be distributed on a plurality of network units. Some or all of the units may be selected according to actual needs to achieve the objectives of the solutions of the embodiments.

In addition, functional units in the embodiments of the present disclosure may be integrated into one processing unit, or each of the units may exist alone physically, or two or more units are integrated into one unit.

All or some of the foregoing embodiments may be implemented by using software, hardware, firmware, or any combination thereof. When software is used to implement the embodiments, all or some of the embodiments may be implemented in a form of a computer program product. The computer program product includes one or more computer instructions. When the computer program instructions are loaded and executed on a computer, the procedures or functions according to the embodiments of the present disclosure are all or partially generated. The computer may be a general-purpose computer, a dedicated computer, a computer network, or another programmable apparatus. The computer instructions may be stored in a computer-readable storage medium or transmitted from one computer-readable storage medium to another computer-readable storage medium, for example, the computer instructions may be transmitted from a website, a computer, a server, or a data center to another website, computer, server, or data center in a wired (e.g., a coaxial cable, an optical fiber, a digital subscriber line (DSL)) or a wireless (e.g., infrared, wireless, microwave, etc.) manner. The computer-readable storage medium may be any usable medium readable by a computer, or a data storage device, such as a server or a data center including one or more integrated usable media. The usable medium may be a magnetic medium (e.g., a floppy disk, a hard disk, or a magnetic tape), an optical medium (e.g., a digital video disk (DVD)), a semiconductor medium (e.g., a solid state disk (SSD)), or the like.

The foregoing descriptions are merely specific implementations of the present disclosure, but the protection scope of the present disclosure is not limited thereto, and any changes or substitutions may be easily conceived of by a person skilled in the art within the technical scope disclosed in the present disclosure. Therefore, the protection scope of the present disclosure shall be subject to the protection scope of the claims.

## Claims

1. A method for positioning, comprising:
determining, by a positioning device, one or both of reliability and integrity of a positioning result; and
transmitting, by the positioning device, one or both of the reliability and the integrity of the positioning result to a positioning request device;
wherein one or both of the reliability and the integrity of the positioning result is indicated by one or more of: a number of base stations participating in positioning, a positioning error, and a positioning error level.

2. The method according to claim 1, wherein one or both of the positioning error and the positioning error level is related to the number of base stations participating in positioning.

3. The method according to claim 2, wherein one or both of the positioning error and the positioning error level satisfies one or more of:
the larger the number of base stations participating in positioning, the smaller the positioning error;
the smaller the number of base stations participating in positioning, the greater the positioning error;
the larger the number of base stations participating in positioning, the higher the positioning error level; and
the smaller the number of base stations participating in positioning, the lower the positioning error level.

4. The method according to any one of claims 1 to 3, wherein one or both of the reliability and the integrity of the positioning result is related to one or more of: the number of base stations participating in positioning, a position of a base station, a height of the base station, and an antenna direction of the base station.

5. The method according to claim 4, wherein if the number of base stations participating in positioning is two, one or both of the reliability and the integrity of the positioning result is determined based on a first position and a second position, and the first position and the second position are determined based on the two base stations participating in positioning.

6. The method according to claim 5, wherein one or both of the reliability and the integrity of the positioning result is determined based on a distance between a midpoint position of the first position and the second position and one of the first position and the second position.

7. The method according to claim 4, wherein if the number of base stations participating in positioning is one, one or both of the reliability and the integrity of the positioning result is determined based on a coverage of the one base station participating in positioning.

8. The method according to claim 7, wherein one or both of the reliability and the integrity of the positioning result is determined based on half of an average radius of the coverage.

9. A method for positioning, comprising:
receiving, by a positioning request device, one or both of reliability and integrity of a positioning result transmitted by a positioning device;
wherein one or both of the reliability and the integrity of the positioning result is indicated by one or more of: a number of base stations participating in positioning, a positioning error, and a positioning error level.

10. The method according to claim 9, wherein one or both of the positioning error and the positioning error level is related to the number of base stations participating in positioning.

11. The method according to claim 10, wherein one or both of the positioning error and the positioning error level satisfies one or more of:
the larger the number of base stations participating in positioning, the smaller the positioning error;
the smaller the number of base stations participating in positioning, the greater the positioning error;
the larger the number of base stations participating in positioning, the higher the positioning error level; and
the smaller the number of base stations participating in positioning, the lower the positioning error level.

12. The method according to any one of claims 9 to 11, wherein one or both of the reliability and the integrity of the positioning result is related to one or more of: the number of base stations participating in positioning, a position of a base station, a height of the base station, and an antenna direction of the base station.

13. The method according to claim 12, wherein if the number of base stations participating in positioning is two, one or both of the reliability and the integrity of the positioning result is determined based on a first position and a second position, and the first position and the second position are determined based on the two base stations participating in positioning.

14. The method according to claim 13, wherein one or both of the reliability and integrity of the positioning result is determined based on a distance between a midpoint position of the first position and the second position and one of the first position and the second position.

15. The method according to claim 12, wherein if the number of base stations participating in positioning is one, one or both of the reliability and the integrity of the positioning result is determined based on a coverage of the one base station participating in positioning.

16. The method according to claim 15, wherein one or both of the reliability and the integrity of the positioning result is determined based on half of an average radius of the coverage.

17. A method for positioning, comprising:
determining, by a positioning device, whether a position of a base station is accurate;
transmitting, by the positioning device, a first request message to a network device when the position of the base station is inaccurate, wherein the first request message is used to request to update the position of the base station;
receiving, by the positioning device, an updated position of the base station transmitted by the network device; and
locating, by the positioning device, a terminal device using the updated position of the base station.

18. The method according to claim 17, wherein the positioning device determining whether the position of the base station is accurate includes:
determining, by the positioning device, a first distance between a first device and the base station based on a position of the first device and the position of the base station;
determining, by the positioning device, a second distance between the first device and the base station based on related information of positioning measurement between the first device and the base station; and
determining, by the positioning device, whether the position of the base station is accurate based on the first distance and the second distance.

19. The method according to claim 18, wherein whether the position of the base station is accurate is determined based on a correlation between the first distance and the second distance.

20. The method according to claim 19, wherein if the correlation is less than a preset threshold, the position of the base station is inaccurate.

21. The method according to any one of claims 18 to 20, wherein the related information of the positioning measurement includes one or both of a time advance, TA, and a path loss.

22. A positioning device, comprising:
a determining unit, configured to determine one or both of reliability and integrity of a positioning result; and
a transmitting unit, configured to transmit one or both of the reliability and the integrity of the positioning result to a positioning request device;
wherein one or both of the reliability and the integrity of the positioning result is indicated by one or more of: a number of base stations participating in positioning, a positioning error, and a positioning error level.

23. The positioning device according to claim 22, wherein one or both of the positioning error and the positioning error level is related to the number of base stations participating in positioning.

24. The positioning device according to claim 23, wherein one or both of the positioning error and the positioning error level satisfies one or more of:
the larger the number of base stations participating in positioning, the smaller the positioning error;
the smaller the number of base stations participating in positioning, the greater the positioning error;
the larger the number of base stations participating in positioning, the higher the positioning error level; and
the smaller the number of base stations participating in positioning, the lower the positioning error level.

25. The positioning device according to any one of claims 22 to 24, wherein one or both of the reliability and the integrity of the positioning result is related to one or more of: the number of base stations participating in positioning, a position of a base station, a height of the base station, and an antenna direction of the base station.

26. The positioning device according to claim 25, wherein if the number of the base stations participating in positioning is two, one or both of the reliability and the integrity of the positioning result is determined based on the first position and the second position, and the first position and the second position are determined based on the two base stations participating in positioning.

27. The positioning device according to claim 26, wherein one or both of the reliability and the integrity of the positioning result is determined based on a distance between a midpoint position of the first position and the second position and one of the first position and the second position.

28. The positioning device according to claim 25, wherein if the number of base stations participating in positioning is one, one or both of the reliability and the integrity of the positioning result is determined based on a coverage of the one base station participating in positioning.

29. The positioning device according to claim 28, wherein one or both of the reliability and the integrity of the positioning result is determined based on half of an average radius of the coverage.

30. A positioning request device, comprising:
a receiving unit, configured to receive one or both of reliability and integrity of a positioning result transmitted by a positioning device;
wherein one or both of the reliability and the integrity of the positioning result is indicated by one or more of: a number of base stations participating in positioning, a positioning error, and a positioning error level.

31. The positioning request device according to claim 30, wherein one or both of the positioning error and the positioning error level is related to the number of base stations participating in positioning.

32. The positioning request device according to claim 31, wherein one or both of the positioning error and the positioning error level satisfies one or more of:
the larger the number of base stations participating in positioning, the smaller the positioning error;
the smaller the number of base stations participating in positioning, the greater the positioning error;
the larger the number of base stations participating in positioning, the higher the positioning error level; and
the smaller the number of base stations participating in positioning, the lower the positioning error level.

33. The positioning request device according to any one of claims 30 to 32, wherein one or both of the reliability and the integrity of the positioning result is related to one or more of: the number of base stations participating in positioning, a position of the base station, a height of the base station, and an antenna direction of the base station.

34. The positioning request device according to claim 33, wherein if the number of base stations participating in positioning is two, one or both of the reliability and the integrity of the positioning result is determined based on a first position and a second position, and the first position and the second position are determined based on the two base stations participating in positioning.

35. The positioning request device according to claim 34, wherein one or both of the reliability and the integrity of the positioning result is determined based on a distance between a midpoint position of the first position and the second position and one of the first position and the second position.

36. The positioning request device according to claim 33, wherein if the number of base stations participating in positioning is one, one or both of the reliability and the integrity of the positioning result is determined based on a coverage of the one base station participating in positioning.

37. The positioning request device according to claim 36, wherein one or both of the reliability and the integrity of the positioning result is determined based on half of an average radius of the coverage.

38. A positioning device, comprising:
a determining unit, configured to determine whether a position of a base station is accurate; and
a transmitting unit, configured to transmit a first request message to a network device when the position of the base station is inaccurate, wherein the first request message is used to request to update the position of the base station;
a receiving unit, configured to receive an updated position of the base station transmitted by the network device; and
a positioning unit, configured to position a terminal device using the updated position of the base station.

39. The positioning device according to claim 38, wherein the determining unit is configured to:
determine a first distance between a first device and the base station based on a position of the first device and the position of the base station;
determine a second distance between the first device and the base station based on related information of positioning measurement between the first device and the base station; and
determine whether the position of the base station is accurate based on the first distance and the second distance.

40. The positioning device according to claim 39, wherein whether the position of the base station is accurate is determined based on a correlation between the first distance and the second distance.

41. The positioning device according to claim 40, wherein if the correlation is less than a preset threshold, the position of the base station is inaccurate.

42. The positioning device according to any one of claims 39 to 41, wherein the related information of the positioning measurement includes one or both of a time advance, TA, and a path loss.

43. An apparatus for wireless communication, comprising a memory and a processor, wherein the memory is configured to store a program, and the processor is configured to invoke the program in the memory to cause the apparatus to perform the method according to any one of claims 1 to 8, 9 to 16, or 17 to 21.

44. An apparatus, comprising a processor, wherein the processor is configured to invoke a program from a memory to cause the apparatus to perform the method according to any one of claims 1 to 8, 9 to 16, or 17 to 21.
